# EUROPÄISCHE PATENTANMELDUNG

(11) **EP 3 772 395 A1**
(43) Veröffentlichungstag der Anmeldung: **10.02.2021**
(21) Anmeldenummer: 19190318.6
(22) Anmeldetag: 06.08.2019
(51) Int. Cl.: B25H 1/16, B65G 65/00, B23P 21/00

(54) **ARBEITSPLATZ MIT ROLLENSTRECKE SOWIE BE- UND ENTLADEWAGEN**

(71) Anmelder: Mehltretter, J. Michael, 82049 Pullach (DE)
(72) Erfinder: Mehltretter, J. Michael, 82049 Pullach (DE)
(74) Vertreter: Lohr, Jöstingmeier & Partner

(57) **Zusammenfassung**

Ein Arbeitsplatzsystem umfasst einen Arbeitsplatz (100) mit einer höhenverstellbare Arbeitsfläche (110) in Form einer Rollenstrecke (200) und einen Wagen (300) mit einer Wagen-Rollenstrecke (310) und einer Hilfsrollenstrecke (320). Zum Entladen eines Werkstücks (400) von dem Arbeitsplatz (100) werden die folgenden Schritte in der Reihenfolge aufgeführt:
- Verfahren der höhenverstellbaren Arbeitsfläche (110) in eine obere Position,
- Einschieben des Wagens (300) unter die höhenverstellbare Arbeitsfläche (110),
- Verfahren der höhenverstellbaren Arbeitsfläche (110) in eine untere Position, die unterhalb der oberen Position liegt, sodass Hilfsrollen (321) der Hilfsrollenstrecke (320) zwischen Rollen (210) der Rollenstrecke (200) hindurchragen,
- Verschieben des Werkstücks über die Hilfsrollenstrecke (320) auf die Wagen-Rollenstrecke (310),
- Verfahren der höhenverstellbaren Arbeitsfläche (110) in die obere Position,
- Herausziehen des Wagens (300) unter der höhenverstellbaren Arbeitsfläche (110).

## Beschreibung

### Technisches Gebiet

Die Erfindung betrifft einen Arbeitsplatz, der in eine Rollenstrecke integriert ist, um schwere Gegenstände zu bearbeiten. Durch einen Be- und Entladewagen können Gegenstände von der Rollenstrecke entnommen bzw. eingefügt werden.

### Stand der Technik

In der DE 20 2004 014 957 U1 ist eine Vorrichtung zum Verteilen von Gegenständen offenbart. Eine Rollenstrecke hat einen quer dazu angeordneten Rollensatz, der hydraulisch in zwei unterschiedliche Richtungen verschwenkt werden kann und gleichzeitig in einer Endlage unter einem Winkel zur Rollenstrecke steht, sodass Gegenstände auf zwei gegenüberliegende Seiten der Rollenstrecke ausgeleitet werden können.

In der EP 3 441194 A1 ist ein Arbeitsplatz offenbart. Dieser Arbeitsplatz umfasst einen Tisch mit verschiedenen Anbauteilen wie Greifschalenträgern oder Beleuchtungseinheiten.

### Darstellung der Erfindung

Der Erfindung liegt die Aufgabe zugrunde, einen Arbeitsplatz mit einer Rollenstrecke zu konfigurieren, sodass mit diesem Arbeitsplatz auch schwere Gegenstände ohne großen Kraftaufwand bearbeitet werden können, wobei durch einen Be- und Entladewagen Gegenstände vom Arbeitsplatz entnommen bzw. auf den Arbeitsplatz geladen werden können. Der Arbeitsplatz soll betriebssicher, fehlbedienungssicher, einfach zu bedienen und kostengünstig sein.

Diese Aufgabe wird durch eine Vorrichtung nach Anspruch 1 gelöst. Vorteilhafte Ausgestaltungen der Erfindung sind in den Unteransprüchen angegeben.

Ein erfindungsgemäßer Arbeitsplatz umfasst eine höhenverstellbare Arbeitsfläche mit einer Rollenstrecke. Die Rollenstrecke hat eine Transportrichtung quer zum Arbeitsplatz, sodass beispielsweise Werkstücke von links (aus der Sicht einer am Arbeitsplatz in einer Arbeitsposition arbeitenden Person) zur Arbeitsposition bewegt werden und nach der Bearbeitung nach rechts den Arbeitsplatz verlassen. Auch eine umgekehrte Transportrichtung von rechts nach links wäre möglich. Die höhenverstellbare Arbeitsfläche ist bevorzugt auf einem Trägerrahmen befestigt. Dieser Trägerrahmen kann eine Konstruktion aus Aluminium-Winkelprofilen oder auch eine geschraubte oder geschweißte Konstruktion aus Stahlprofilen, oder eine Kombination umfassen. Zur Höhenverstellung ist die Arbeitsfläche bevorzugt auf wenigstens einer, bevorzugt vier in der Länge verstellbaren Stützen gelagert. Bevorzugt sind hier vier Stützen ähnlich wie Tischbeine eines Tisches an den Ecken der Arbeitsfläche angeordnet. Es kann aber auch eine größere Anzahl von Stützen vorgesehen sein.

Der Arbeitsplatz könnte auch als zweiteilige Rahmenkonstruktion aufgebaut sein, wobei ein unterer Trägerrahmen zur Aufstellung auf einem Fußboden ausgelegt ist. Hierzu könnte er beispielsweise auf Aufstellfüße, die bevorzugt in ihrer Höhe einstellbar sind, aufweisen. Bevorzugt sind wenigstens vier Aufstellfüße vorgesehen. Es können aber auch mehr Aufstellfüße vorgesehen werden. Ein oberer Trägerrahmen könnte die Arbeitsfläche mit der Rollenstrecke tragen. Zwischen dem unteren Trägerrahmen und dem oberen Trägerrahmen könnten die längenverstellbaren Stützen vorgesehen sein.

Grundsätzlich sollten die längenverstellbaren Stützen mit einfachen Mitteln im Betrieb in ihrer Länge verstellbar sein. Hierzu haben sie bevorzugt einen Antrieb. Dieser Antrieb kann beispielsweise durch ein Handrad oder eine Kurbel erfolgen. Besonders bevorzugt erfolgt er aber durch einen Elektromotor oder durch einen pneumatischen oder hydraulischen Antrieb. Besonders günstig ist es, wenn die höhenverstellbare Arbeitsfläche durch elektrisch betriebene, längenverstellbare Stützen verstellbar ist. Hier kann die Bedienung besonders einfach durch Schalter realisiert werden. Zudem können auch auf einfache Art und Weise, zum Beispiel durch Positionsgeber, Schalter oder Linearweggeber, bestimmte Positionen erkannt, gespeichert bzw. angefahren werden. Der Speicher kann bevorzugt wenigstens eine, zwei oder drei Längen speichern.

Durch die Höhenverstellung kann die Arbeitsfläche bzw. den oberen Rahmen in eine obere Position gebracht werden, die ein Einschieben eines Wagens unter die Arbeitsfläche ermöglicht. Der Wagen wird hier bevorzugt von vorne, also quer zur Transportrichtung der Rollenstrecke und bevorzugt an der Arbeitsposition eingeschoben. Hier wird im Normalfall die Arbeitsposition verlassen, um den Wagen zu bedienen. Der Wagen könnte aber auch von hinten eingeschoben werden.

Weiterhin kann die Arbeitsfläche bzw. den oberen Rahmen in eine untere Position gebracht werden, die ein Entladen eines Werkstückes von der Arbeitsfläche auf den Wagen ermöglicht. Hier greifen dann die Hilfsrollen des Wagens in Zwischenräume zwischen den Rollen der Arbeitsfläche ein, so dass ein Werkstück bevorzugt senkrecht zur Transportrichtung der Rollenstrecke der Arbeitsfläche vom bzw. zum Wagen bewegt werden kann.

Zusätzlich kann vorteilhafterweise die Arbeitsfläche bzw. der oberen Rahmen in eine weitere, frei wählbare Arbeitsposition gebracht werden.

Ein Wagen hat einen Rahmen mit Bodenrollen sowie eine Wagen-Rollenstrecke und eine Hilfsrollenstrecke. Beide Rollenstrecken haben die gleiche Transportrichtung und angeglichene Höhen, sodass ein Werkstück von der Hilfsrollenstrecke auf die Wagenrollenstrecke und umgekehrt verschoben werden kann. Die Hilfsrollenstrecke hat eine Mehrzahl von Hilfsrollen, die bevorzugt jeweils eine wesentlich kleinere Länge als die Länge der Wagenrollen haben. Die Länge der Hilfsrollen ist bevorzugt kleiner als ein Viertel, besonders bevorzugt kleiner als ein Zehntel der Länge der Wagenrollen. Die Hilfsrollen können einfache Kugellager sein, bei denen die Außenringe die Funktion einer Hilfsrolle erfüllen. Bevorzugt sind die Drehachsen der Hilfsrollen senkrecht zur Wagen-Transportrichtung und damit bevorzugt parallel zu den Drehachsen der Wagen-Rollen.

Die Hilfsrollen können, wenn der Wagen unter die Arbeitsfläche geschoben ist, zwischen Zwischenräume oder Lücken benachbarter Rollen der Rollenstrecke hindurchragen, sodass sie etwas über den Rollen der Rollenstrecke der Arbeitsfläche stehen. Der Überstand ist bevorzugt zwischen 1 mm und 10 mm, besonders bevorzugt zwischen 0.5 mm und 5 mm oder zwischen 0.5 mm und 3 mm. Damit tragen die Hilfsrollen das Werkstück, das damit quer zur Rollenstrecke der Arbeitsfläche in Richtung des Wagens verschoben werden kann.

Der besondere Vorteil der Erfindung liegt aber darin, dass die aus ergonomischen Gründen ohnehin notwendige Höhenverstellung des Arbeitsplatzes zur Anpassung der Arbeitshöhe an unterschiedliche Personen bzw. Werkstücke gleichzeitig zur Be- bzw. Entladung durch einen Wagen verwendet werden kann. Dies vereinfacht die Anordnung und reduziert die Kosten. Gleichzeitig ist die Bedienung einfacher, da nur eine einzige Höhenverstelleinrichtung bedient werden muss. Dies reduziert auch das Risiko einer Fehlbedienung.

In einer alternativen Ausführungsform kann alternativ bzw. zusätzlich zum Arbeitsplatz der Wagen höhenverstellbar ausgeführt werden.

In einer weiteren Ausführungsform könnten Bremselemente zwischen den Hilfsrollen angeordnet sein. Diese könnten im abgesenkten Zustand der Rollenstrecke von unten gegen die Rollen drücken und somit die Rollen bremsen bzw. eine Drehung der Rollen verlangsamen bzw. blockieren. Die Bremselemente können Metall oder Kunststoff, bevorzugt auch Gummi umfassen, um eine höhere Reibung zu erreichen.

In eine anderen Ausführungsform könnte auch die Hilfsrollenstrecke in den unteren Rahmen integriert sein.

Eine weitere Erfindungsvariante hat einen zweiten Rollensatz quer zu den ersten feststehend in einer vordefinierten niedrigen Höhe. Sobald der Tisch in die unterste Arbeitsposition gefahren wird, übernehmen diese Rollen. Damit kann der Be- bzw. Entladewagen einfacher und kompakter gestaltet werden.

Die hier verwendeten Rollenstrecken haben bevorzugt eine Vielzahl von Rollen, die bevorzugt parallel entlang der Rollenstrecke angeordnet sind. Jede dieser Rollen kann um eine Drehachse gedreht werden, sodass ein darauf befindliches Werkstück in einer Transportrichtung bewegt werden kann. Mit dem Begriff der Transportrichtung ist hier die bevorzugte Transportrichtung einer Rollenstrecke gemeint. Ebenso lassen sich aber auch Werkstücke in entgegengesetzter Richtung auf der Rollenstrecke verschieben. Eine Verschiebung in Richtungen quer dazu oder schräg dazu ist normalerweise nicht oder nur schwer möglich. Bevorzugt sind die Drehachsen der Rollen senkrecht zur Transportrichtung. Die Rollen haben vorteilhafterweise eine Länge entsprechend der Breite der Rollenstrecke. Die Rollen können ein Material wie Stahl, Aluminium, Kunststoff oder eine Kombination daraus umfassen. Sie sind bevorzugt kugelgelagert.

Ein erfindungsgemäßes Verfahren Entladen eines Werkstücks von einem Arbeitsplatz umfasst die Schritte in der angegebenen Reihenfolge:
- Verfahren der höhenverstellbaren Arbeitsfläche in eine obere Position,
- Einschieben des Wagens unter die höhenverstellbare Arbeitsfläche,
- Verfahren der höhenverstellbaren Arbeitsfläche in eine untere Position, die unterhalb der oberen Position liegt, sodass Hilfsrollen der Hilfsrollenstrecke zwischen Rollen der Rollenstrecke hindurchragen,
- Verschieben des Werkstücks über die Hilfsrollenstrecke auf die Wagen-Rollenstrecke,
- Verfahren der höhenverstellbaren Arbeitsfläche in die obere Position,
- Herausziehen des Wagens unter der höhenverstellbaren Arbeitsfläche.

Zusätzlich kann der folgende Schritt nachfolgend ausgeführt werden:
- Verfahren der höhenverstellbaren Arbeitsfläche (110) in eine ergonomische Arbeitsposition.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine bevorzugte Ausführungsform.
- Figur 2: zeigt einen Arbeitsplatz mit einer Arbeitsfläche in einer oberen Position.
- Figur 3: zeigt den Arbeitsplatz mit der Arbeitsfläche in einer unteren Position.
- Figur 4: zeigt den Arbeitsplatz mit der Arbeitsfläche in einer oberen Position, sodass der Wagen herausgezogen werden kann.
- Figur 5: zeigt einen Wagen im Detail.
- Figur 6: zeigt ein Detail aus der Figur 2.
- Figur 7: zeigt ein Detail aus der Figur 3.

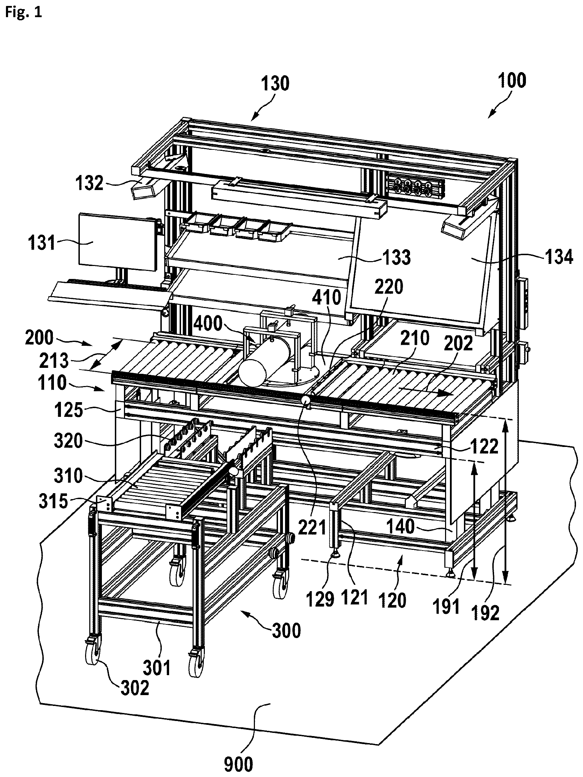

In Figur 1 ist eine bevorzugte Ausführungsform der Erfindung dargestellt. Ein Arbeitsplatzsystem umfasst einen Arbeitsplatz 100 sowie einen Wagen 300. Der Arbeitsplatz steht bevorzugt fest, beispielsweise durch Aufstellfüße 129 auf einer ebenen Fläche, wie einem Fußboden 900. Der Wagen 300 ist bevorzugt beweglich auf der ebenen Fläche, wie dem Fußboden 900 und weist hierzu bevorzugt Bodenrollen 302 auf. Besonders günstig ist eine Anordnung mit vier Rollen.

Der Arbeitsplatz 100 umfasst bevorzugt einen Trägerrahmen 120 umfassend einen unteren Rahmen 121, welcher bevorzugt auf dem Fußboden 900 steht, und einen oberen Rahmen 122, der bevorzugt eine höhenverstellbare Arbeitsfläche 110 mit einer Rollenstrecke 200 umfasst. Bevorzugt ist die Rollenstrecke 200 fest mit dem oberen Rahmen 122 verbunden. Weiterhin ist bevorzugt der obere Rahmen 122 mit dem unteren Rahmen 121 durch wenigstens eine, bevorzugt vier längenverstellbare Stützen 140 verbunden. Die längenverstellbaren Stützen 140 können bevorzugt durch einen Antrieb in ihrer Länge verstellt werden und verändern somit den Abstand zwischen dem oberen Rahmen 122 und dem unteren Rahmen 121. Dadurch ändert sich auch die Höhe der höhenverstellbaren Arbeitsfläche 110 mit der Rollenstrecke 200 relativ zum Fußboden 900.

Optional weist der Arbeitsplatz 100 noch einen Aufbau 130 mit verschiedenen Komponenten eines Arbeitsplatzes, wie beispielsweise einem Bildschirm mit Tastatur 131, einer Beleuchtung 132, Ablageflächen 133 oder weiterem Zubehör 134 auf.

Die Figur zeigt noch ein Werkstück 400 auf einem Werkstückträger 410 in einer bevorzugten Bearbeitungsposition auf der Rollenstrecke.

Die Rollenstrecke 200 umfasst eine Vielzahl von Rollen 210, die parallel entlang der Rollenstrecke angeordnet sind. Diese können um eine Drehachse 214 gedreht werden, sodass ein darauf befindliches Werkstück 400 in einer Transportrichtung 202 bewegt werden kann. Mit dem Begriff der Transportrichtung ist hier die bevorzugte Transportrichtung einer Rollenstrecke gemeint. Ebenso lassen sich aber auch Werkstücke in entgegengesetzter Richtung auf der Rollenstrecke verschieben. Eine Verschiebung in Richtungen quer dazu oder schräg dazu ist normalerweise nicht oder nur schwer möglich. Bevorzugt sind die Drehachsen 214 der Rollen senkrecht zur Transportrichtung 202. Die Rollen 210 haben vorteilhafterweise eine Länge entsprechend der Breite 213 der Rollenstrecke.

Um ein unbeabsichtigtes Bewegen des Werkstücks zu verhindern, ist bevorzugt wenigstens eine Sperre 220 zwischen den Rollen angeordnet. Die Sperre kann eine einfache Platte sein, die aus dem Spalt zwischen zwei benachbarten Rollen herausragt, sodass das Werkstück 400 bzw. der Werkstückträger 410 daran anschlägt und somit eine weitere Bewegung verhindert wird. Zur Betätigung der Sperre kann ein Betätigungshebel 221 vorgesehen sein.

Der Wagen 300 hat bevorzugt einen Rahmen 301, an dem weiterhin bevorzugt wenigstens eine, besonders bevorzugt vier Bodenrollen 302 angebracht sind, mit welchen der Wagen 300 bevorzugt auf einem Fußboden 900 steht bzw. auf diesem bewegt werden kann. Der Wagen umfasst bevorzugt eine Wagen-Rollenstrecke 310, welche bevorzugt an einem Ende einen Anschlag 315 umfasst. Gegenüber dem Anschlag und bevorzugt in einem Abstand zur Wagen-Rollenstrecke 310 ist eine Hilfsrollenstrecke 320 angeordnet. Diese wird im Zusammenhang mit nachfolgenden Zeichnungen noch im Detail beschrieben.

Der Wagen kann bevorzugt senkrecht Transportrichtung 202 der Rollenstrecke 200 an den Arbeitsplatz und unter die Arbeitsfläche geschoben werden.

In dieser Figur ist die höhenverstellbare Arbeitsfläche in einer Position dargestellt, in der die Oberkante der Arbeitsfläche in einer Höhe 192 in einer ergonomischen Arbeitsposition ist. Daraus resultiert die unterste Höhe 191 der Vorderkante des oberen Rahmens 122.

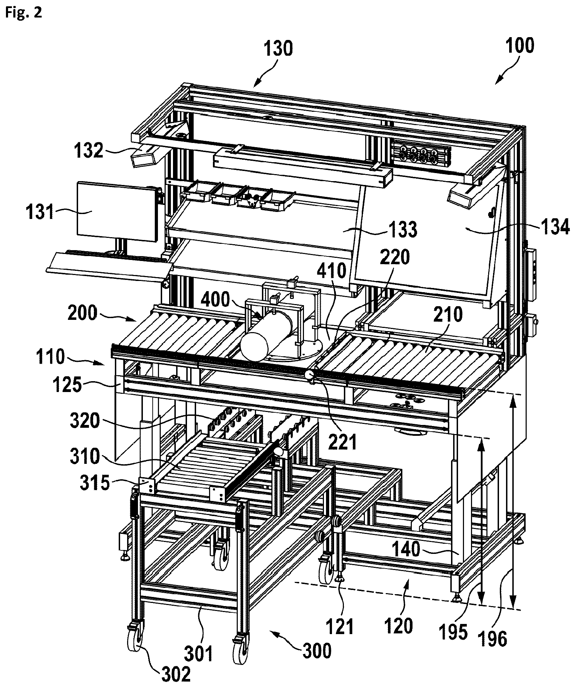

In der Figur 2 ist der Arbeitsplatz mit der höhenverstellbaren Arbeitsfläche 110 in einer oberen Position dargestellt. Diese Position ist so hoch gewählt, dass die unterste Höhe 195 der Vorderkante des oberen Rahmens oberhalb der maximalen Höhe der Hilfsrollenstrecke 320 liegt, sodass zumindest der die Hilfsrollenstrecke 320 umfassende Teil des Wagens 300 in den Arbeitsplatz bzw. unter die höhenverstellbare Arbeitsfläche verschoben werden dann.

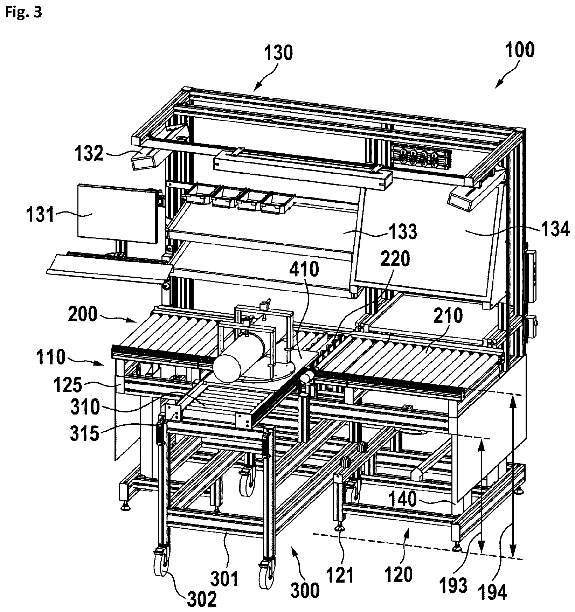

In der Figur 3 ist der Arbeitsplatz in einer unteren Position gezeigt. Hier ist nun die unterste Höhe 193 der Vorderkante des oberen Rahmens in einer unteren Position und resultierend die Höhe 194 der Oberkante der Arbeitsfläche. In dieser unteren Position ragen die Hilfsrollen 321 der Hilfsrollenstrecke 320 zwischen einzelnen Rollen 210 der Rollenstrecke 200 hindurch, sodass das Werkstück 400 auf diesen aufliegt und das Werkstück 400 von der Rollenstrecke 200 weg in Richtung zu und schließlich auf die Wagen-Rollenstrecke 310 verschoben werden kann. Bevorzugt ist die untere Position so gewählt, dass die Hilfsrollen 321 der Hilfsrollenstrecke 320 die Rollen 210 der Rollenstrecke 200 um einige mm überragen. Bevorzugt liegt die Höhendifferenz bei weniger als 10 mm, besonders bevorzugt bei weniger als 5 mm, aber bevorzugt bei höher als 1 mm.

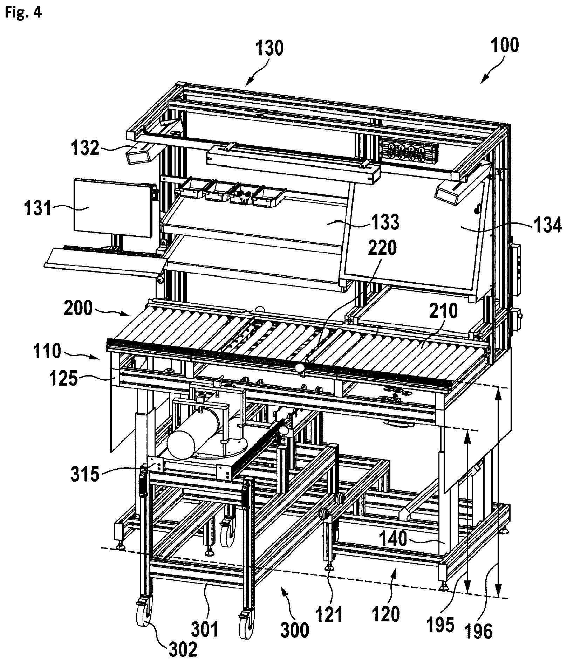

In Figur 4 ist der Arbeitsplatz mit der Arbeitsfläche in einer oberen Position gezeigt, sodass der Wagen herausgezogen werden kann. Die obere Position entspricht bevorzugt der oberen Position, wie sie in der Figur 2 dargestellt wurde. Es kann nun hier der Wagen unter der Arbeitsfläche herausgezogen werden und somit das auf dem Wagen befindliche Werkstück vom Arbeitsplatz entnommen werden.

In den letzten Figuren wurde die Entnahme eines Werkstücks vom Arbeitsplatz in verschiedenen Schritten dargestellt. Das Einfügen eines Werkstücks in einen Arbeitsplatz ist in umgekehrter Reihenfolge möglich.

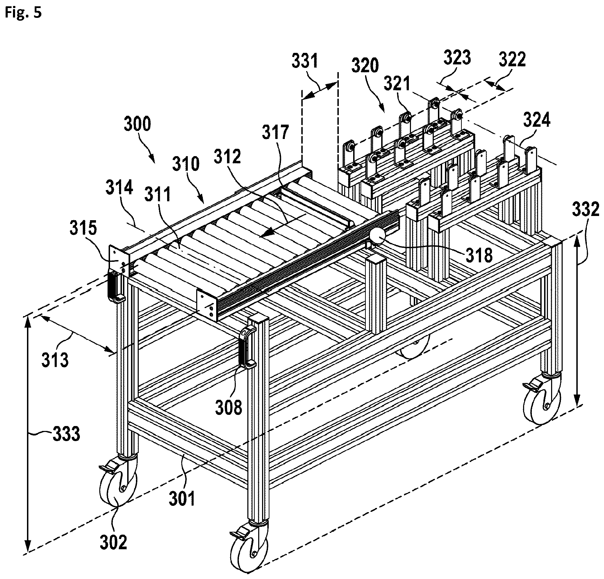

In Figur 5 ist ein Wagen 300 im Detail dargestellt. An einem Rahmen 301, der beispielsweise aus einem Aluminiumprofil besteht, ist wenigstens eine und bevorzugt vier Bodenrollen 302 befestigt, mit denen der Wagen über einen Boden rollen kann bzw. gerollt werden kann. Zur Bewegung des Wagens können Handgriffe 308 vorgesehen sein.

Auf der Oberseite des Wagens sind eine Wagen-Rollenstrecke 310 und eine Hilfsrollenstrecke 320 angeordnet. Die Wagen-Rollenstrecke 310 umfasst bevorzugt eine Mehrzahl von Wagenrollen 311, die parallel zueinander angeordnet sind. Diese können um eine Drehachse 314 gedreht werden, sodass ein darauf befindliches Werkstück 400 in einer Wagen-Transportrichtung 312 bewegt werden kann. Mit dem Begriff der Wagen-Transportrichtung ist hier die bevorzugte Transportrichtung der Wagen-Rollenstrecke gemeint. Ebenso lassen sich aber auch Werkstücke in entgegengesetzter Richtung auf der Wagen-Rollenstrecke verschieben. Eine Verschiebung in Richtungen quer dazu oder schräg dazu ist normalerweise nicht oder nur schwer möglich. Bevorzugt sind die Drehachsen 314 der Wagenrollen senkrecht zur Wagen-Transportrichtung 312. Die Wagenrollen 311 haben eine Länge, die bevorzugt im Wesentlichen der Breite 313 der Wagen-Rollenstrecke entspricht.

An der Wagen-Rollenstrecke kann eine Sperre 317 und insbesondere eine Rücklaufsperre angeordnet sein, welche beispielsweise mit einem Betätigungshebel 318 betätigt werden kann. Eine solche Sperre verhindert ein Herausrollen eines Werkstücks von der Rollenstrecke während des Transports des Wagens.

Die Hilfsrollenstrecke 320 umfasst eine Mehrzahl von Hilfsrollen 321, die jeweils eine wesentlich kleinere Länge 323 als die Länge der Wagenrollen 311 haben. Die Länge der Hilfsrollen ist bevorzugt kleiner als ein Viertel, besonders bevorzugt kleiner als ein Zehntel der Länge der Wagenrollen. Die Hilfsrollen können einfache Kugellager sein, bei denen die Außenringe die Funktion einer Hilfsrolle erfüllen. Bevorzugt sind die Drehachsen 324 der Hilfsrollen senkrecht zur Wagen-Transportrichtung 312 und damit bevorzugt parallel zu den Drehachsen 314 der Rollen. Bevorzugt entspricht die Höhe der Hilfsrollen der Höhe der Wagenrollen. Damit lässt sich ein Werkstück auf gleicher Höhe von den Hilfsrollen auf die Wagenrollen rollen.

Die Hilfsrollen 321 der Hilfsrollenstrecke 320 haben bevorzugt einen seitlichen Abstand 322 zueinander (in Achsrichtung), der so dimensioniert ist, dass die einzelnen Hilfsrollen 321 in Lücken zwischen benachbarten Rollen 210 der Rollenstrecke 200 des Arbeitsplatzes 100 passen.

Zwischen der Hilfsrollenstrecke 320 und der Wagen-Rollenstrecke 310 ist bevorzugt eine Lücke vorgesehen, die eine Breite 331 und eine Höhe über dem Boden 332 hat, sodass in diese ein vorderer Teil des Trägerrahmens 120 des Arbeitsplatzes passt, sobald sich dieser in der unteren Position befindet.

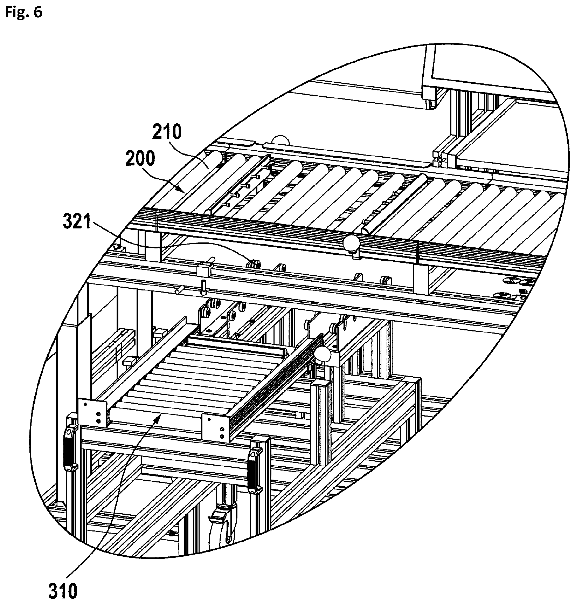

In der Figur 6 ist ein Detail aus der Figur 2, jedoch ohne Werkstück 400 dargestellt. Hier ist die räumliche Zuordnung zwischen dem Wagen 300 und der Rollenstrecke 200 besser zu erkennen. Bei einem späteren Absenken passen die Hilfsrollen 321 genau in die Lücken zwischen den Rollen der Rollenstrecke 200.

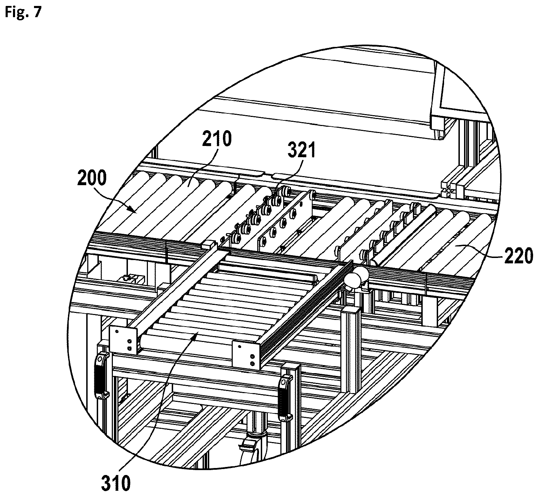

In der Figur 7 ist ein Detail aus der Figur 3, jedoch ohne Werkstück 400 dargestellt. Hier ist nun die höhenverstellbare Arbeitsfläche 110 mit der Rollenstrecke 200 derart abgesenkt, dass die Hilfsrollen 321 nun durch die Lücken der Rollen 210 hindurch ragen. In diesem Ausführungsbeispiel ist eine Anordnung mit sechs Hilfsrollen pro Reihe dargestellt. Grundsätzlich sind auch andere Anzahlen von Hilfsrollen, beispielsweise vier Stück wie in der Figur 5 dargestellt, möglich.

### Bezugszeichenliste

- 100: Arbeitsplatz
- 110: höhenverstellbare Arbeitsfläche
- 120: Trägerrahmen
- 121: unterer Rahmen
- 122: oberer Rahmen
- 125: vorderer Träger
- 129: Aufstellfüße
- 130: Aufbau
- 131: Bildschirm mit Tastatur
- 132: Beleuchtung
- 133: Ablageflächen
- 134: Zubehör
- 140: längenverstellbare Stützen
- 191: unterste Höhe der Vorderkante des oberen Rahmens
- 192: Höhe der Oberkante der Arbeitsfläche in ergonomischer Arbeitsposition
- 193: unterste Höhe der Vorderkante des oberen Rahmens in unterer Position
- 194: Höhe der Oberkante der Arbeitsfläche in unterer Position
- 195: unterste Höhe der Vorderkante des oberen Rahmens in oberer Position
- 196: Höhe der Oberkante der Arbeitsfläche in oberer Position
- 200: Rollenstrecke
- 202: Transportrichtung der Rollenstrecke
- 210: Rollen
- 213: Breite der Rollenstrecke
- 214: Drehachse der Rollen
- 220: Sperre
- 221: Betätigungshebel für Sperre
- 300: Wagen
- 301: Rahmen des Wagens
- 302: Bodenrollen
- 308: Handgriff
- 310: Wagen-Rollenstrecke
- 311: Wagen-Rollen
- 312: Wagen-Transportrichtung
- 313: Breite der Wagen-Rollenstrecke
- 314: Drehachse der Wagen-Rollen
- 315: Anschlag
- 317: Sperre
- 318: Betätigungshebel für Sperre
- 320: Hilfsrollenstrecke
- 321: Hilfsrollen
- 322: seitlicher Abstand der Hilfsrollen
- 323: Länge der Hilfsrollen
- 324: Drehachse der Hilfsrollen
- 331: Lückenbreite
- 332: Höhe der Lücke über dem Boden
- 333: Höhe der Oberkante der Wagen-Rollenstrecke
- 400: Werkstück
- 410: Werkstückträger
- 900: Fußboden

## Patentansprüche

1. Arbeitsplatz (100) umfassend einen Trägerrahmen (120) mit einen unteren Rahmen (121), welcher zum Aufstellen auf einen Fußboden konfiguriert ist, sowie einen oberen Rahmen (122), der eine Arbeitsfläche in Form einer Rollenstrecke (200) mit einer Transportrichtung (202) trägt,
wobei die Rollenstrecke (200) eine Mehrzahl von parallel zueinander angeordneten Rollen (210) umfasst, die jeweils eine Länge entsprechend der Breite (213) der Rollenstrecke und eine Drehachse (214) senkrecht zur Transportrichtung (202) der Rollenstrecke aufweisen, wobei weiterhin zwischen dem oberen Rahmen (122) und dem unteren Rahmen (121) wenigstens eine durch einen Antrieb längenverstellbare Stütze (140) angeordnet ist.

2. Arbeitsplatz (100) nach Anspruch 1,
**dadurch gekennzeichnet, dass**
vier längenverstellbare Stützen (140) zwischen dem oberen Rahmen (122) und dem unteren Rahmen (121) angeordnet sind, wobei die vier längenverstellbaren Stützen (140) synchron betätigbar sind.

3. Arbeitsplatz (100) nach einem der vorhergehenden Ansprüche,
**dadurch gekennzeichnet, dass**
die wenigstens eine längenverstellbare Stütze (140) einen elektrischen, hydraulischen oder pneumatischen Antrieb hat.

4. Arbeitsplatz (100) nach einem der vorhergehenden Ansprüche,
**dadurch gekennzeichnet, dass**
die wenigstens eine längenverstellbare Stütze (140) einen Speicher für wenigstens eine, zwei oder drei Längen aufweist.

5. Arbeitsplatz (100) nach einem der vorhergehenden Ansprüche,
**dadurch gekennzeichnet, dass**
die wenigstens eine längenverstellbare Stütze (140) konfiguriert ist, um den oberen Rahmen (122) in eine obere Position und eine untere Position, welche unterhalb der oberen Position liegt, zu bringen, wobei optional die wenigstens eine längenverstellbare Stütze (140) konfiguriert ist, um den oberen Rahmen (122) in eine weitere, frei wählbare Arbeitsposition zu bringen.

6. Arbeitsplatz (100) nach einem der vorhergehenden Ansprüche,
**dadurch gekennzeichnet, dass**
im Bereich der Rollenstrecke (200) wenigstens eine Sperre (220) angeordnet ist, wobei optional die Sperre (220) betätigt wird, sobald die wenigstens eine längenverstellbare Stütze (140) eine vorgegebene Länge hat oder in einem vorgegebenen Längenbereich ist.

7. Arbeitsplatz (100) nach einem der vorhergehenden Ansprüche,
**dadurch gekennzeichnet, dass**
der Arbeitsplatz (100) wenigstens eines von einer Beleuchtungseinrichtung (132), einem Greifbehälter (133), einer Anzeigevorrichtung (131), einer Steckdose und einem Betätigungsschalter für den Antrieb der wenigstens eine längenverstellbare Stütze (140) umfasst.

8. Arbeitsplatzsystem umfassend einen Arbeitsplatz (100) nach einem der vorhergehenden Ansprüche und wenigstens einen Wagen (300) **dadurch gekennzeichnet, dass**
der Wagen (300) eine Wagen-Rollenstrecke (310) mit einer Wagen-Transportrichtung (312) und eine Hilfsrollenstrecke (320) mit derselben Wagen-Transportrichtung (312) umfasst,
wobei die Wagen-Rollenstrecke (310) eine Mehrzahl von on parallel zueinander angeordneten Wagen-Rollen (311) umfasst, die jeweils eine Länge entsprechend der Breite (313) der Wagen-Rollenstrecke und eine Drehachse (314) senkrecht zur Wagen-Transportrichtung (312) aufweisen, und wobei die Hilfsrollenstrecke (320) eine Mehrzahl von Hilfsrollen (321) umfasst, die jeweils eine Länge kleiner als ¼ der Länge der Wagen-Rollen (311) und eine Drehachse (324) senkrecht zur Wagen-Transportrichtung (312) aufweisen, wobei weiterhin
die Hilfsrollenstrecke (320) in der Wagen-Transportrichtung (312) vor der Wagen-Rollenstrecke (310) angeordnet ist.

9. Arbeitsplatzsystem nach einem der vorhergehenden Ansprüche,
**dadurch gekennzeichnet, dass**
wobei der Abstand (322) von wenigstens zwei ersten Hilfsrollen der wenigstens zwei Hilfsrollen (321) quer zur Wagen-Transportrichtung (312) so dimensioniert ist, dass die wenigstens zwei ersten Hilfsrollen zwischen wenigstens zwei der Rollen (210) eingreifen können.

10. Arbeitsplatzsystem nach einem der vorhergehenden Ansprüche,
**dadurch gekennzeichnet, dass**
der Wagen derart dimensioniert ist, dass er unter die Rollenstrecke (200) geschoben werden kann und wenigstens zwei der Mehrzahl von Hilfsrollen (321) nach oben zwischen wenigstens zwei der Rollen (210) hindurchragen, sodass die Hilfsrollen (321) ein Werkstück (400) tragen und das Werkstück (400) in Wagen-Transportrichtung (312) auf den Wagen bewegt werden kann.

11. Arbeitsplatzsystem nach einem der vorhergehenden Ansprüche,
**dadurch gekennzeichnet, dass**
zwischen der Hilfsrollenstrecke (320) und der Wagen-Rollenstrecke (310) ein Abstand vorgesehen ist, der vorzugsweise den Durchtritt eines Teils des oberen Rahmens des Arbeitsplatzes ermöglicht.

12. Arbeitsplatzsystem nach einem der vorhergehenden Ansprüche,
**dadurch gekennzeichnet, dass**
im Bereich der Wagen-Rollenstrecke (310) wenigstens eine Sperre (220) angeordnet ist und/oder
die Breite der Rollenstrecke (213) der Breite der Wagen-Rollenstrecke (313) entspricht.

13. Verfahren zum Entladen eines Werkstücks (400) von einem Arbeitsplatz (100) aufweisend eine höhenverstellbare Arbeitsfläche (110) in Form einer Rollenstrecke (200) mittels eines Wagens (300) mit einer Wagen-Rollenstrecke (310) und einer Hilfsrollenstrecke (320) umfassend die Schritte in der aufgeführten Reihenfolge:
- Verfahren der höhenverstellbaren Arbeitsfläche (110) in eine obere Position,
- Einschieben des Wagens (300) unter die höhenverstellbare Arbeitsfläche (110),
- Verfahren der höhenverstellbaren Arbeitsfläche (110) in eine untere Position, die unterhalb der oberen Position liegt, sodass Hilfsrollen (321) der Hilfsrollenstrecke (320) zwischen Rollen (210) der Rollenstrecke (200) hindurchragen,
- Verschieben des Werkstücks über die Hilfsrollenstrecke (320) auf die Wagen-Rollenstrecke (310),
- Verfahren der höhenverstellbaren Arbeitsfläche (110) in die obere Position,
- Herausziehen des Wagens (300) unter der höhenverstellbaren Arbeitsfläche (110).

14. Verfahren nach Anspruch 13, **gekennzeichnet durch** die nachfolgenden Schritte:
- Verfahren der höhenverstellbaren Arbeitsfläche (110) in eine ergonomische Arbeitsposition.

15. Durchführung des Verfahrens nach einem der beiden vorhergehenden Ansprüche mit einem Arbeitsplatzsystem nach einem der vorhergehenden, auf ein Arbeitsplatzsystem gerichteten Ansprüche.
